# EUROPÄISCHE PATENTSCHRIFT

(11) **EP 2 473 394 B1**
(45) Veröffentlichungstag und Bekanntmachung des Hinweises auf die Patenterteilung: **03.04.2019**
(21) Anmeldenummer: 10751639.5
(22) Anmeldetag: 31.08.2010
(51) Int. Cl.: B62L 3/02

(54) **GEBERVORRICHTUNG FÜR EIN GESCHLOSSENES HYDRAULIKSYSTEM LENKERGEFÜHRTER FAHRZEUGE**
TRANSMITTER DEVICE FOR A CLOSED HYDRAULIC SYSTEM OF VEHICLES COMPRISING A HANDLEBAR
DISPOSITIF ÉMETTEUR POUR UN SYSTÈME HYDRAULIQUE FERMÉ DE VÉHICULES À GUIDON

(30) Priorität: 01.09.2009 DE 102009039620
(43) Veröffentlichungstag der Anmeldung: 11.07.2012
(60) Teilanmeldung: 12166356.1
(73) Patentinhaber: Gustav Magenwirth GmbH & Co. KG, 72574 Bad Urach (DE)
(72) Erfinder: EBERLEIN, Hubert, 72555 Metzingen (DE); HUJER, Joachim, 72582 Grabenstetten (DE)
(74) Vertreter: Friese Goeden Patentanwälte PartGmbB
(86) Internationale Anmeldenummer: PCT/EP2010/062726
(87) Internationale Veröffentlichungsnummer: WO 2011/026843

(56) Entgegenhaltungen:
- EP-A2- 1 798 126
- DE-A1-102006 040 327
- DE-A1-102007 040 293

## Beschreibung

Die Erfindung betrifft eine Gebervorrichtung für ein geschlossenes Hydrauliksystem lenkergeführter Fahrzeuge gemäß dem Oberbegriff von Anspruch 1, insbesondere eine Gebervorrichtung für ein Hydraulikbremssystem oder ein Hydraulikkupplungssystem lenkergeführter Fahrzeuge und weiter insbesondere für ein Fahrradhydraulikbremssystem.

Die Unteransprüche beanspruchen bevorzugte Weiterbildungen.

Derartige geschlossene Hydrauliksysteme sind beispielsweise durch die Fahrradfelgenbremssysteme der Firma Gustav Magenwirth GmbH & Co. KG mit Sitz in Bad Urach, Deutschland bekannt, die unter der Bezeichnung HS33 vertrieben werden, siehe auch Dokument DE102006040327A1.

Gemäß einer alternativen Ausführung der Erfindung wird eine Gebervorrichtung für ein geschlossenes Hydrauliksystem lenkergeführter Fahrzeuge mit einem Druckraum, in dem bei Betätigung der Gebervorrichtung zur Betätigung einer Nehmervorrichtung Hydraulikflüssigkeit unter Druck gesetzt wird, einem Hydraulikleitungsanschlussglied, das einen Anschlussstutzen zum Anschluss einer Hydraulikleitung und einen Gewindeabschnitt zum Eindrehen in einen Grundkörper der Gebervorrichtung aufweist, und einer Entlüftungsöffnung zum Entlüften des Hydrauliksystems angegeben, wobei das Hydraulikleitungsanschlussglied und der Grundkörper ein Ventil bilden, das die Verbindung zwischen Druckraum und Entlüftungsöffnung bei vollständig eingeschraubtem Hydraulikleitungsanschlussglied schließt, und/oder wobei das Hydraulikleitungsanschlussglied eine Dichtungsfläche und der Grundkörper ein Dichtungsglied aufweist, die miteinander derart zusammenwirken, dass der Druckraum gegenüber der Entlüftungsöffnung abgedichtet ist, wenn das Hydraulikleitungsanschlussglied vollständig in den Grundkörper eingeschraubt ist, und dass der Druckraum mit der Entlüftungsöffnung in Verbindung steht, wenn das Hydraulikleitungsanschlussglied in einer teilweise eingeschraubten Stellung angeordnet ist, und/oder wobei das Hydraulikleitungsanschlussglied eine Dichtung und der Grundkörper eine Dichtungsfläche aufweisen, die miteinander derart zusammenwirken, dass der Druckraum gegenüber der Entlüftungsöffnung abgedichtet ist, wenn das Hydraulikleitungsanschlussglied vollständig in den Grundkörper eingeschraubt ist, und dass der Druckraum mit der Entlüftungsöffnung in Verbindung steht, wenn das Hydraulikleitungsanschlussglied in einer teilweise eingeschraubten Stellung angeordnet ist.

Diese Ausführung der Erfindung hat den Vorteil, dass die Entlüftungsöffnung beim Anschließen der Hydraulikleitung mit dem Hydraulikleitungsanschlussglied automatisch verschlossen wird. Zum Befüllen bzw. Entlüften des Hydrauliksystems wird das Hydraulikleitungsanschlussglied teilweise in den Grundkörper eingeschraubt und anschließend vollständig eingeschraubt, so dass gleichzeitig die Entlüftungsöffnung durch die Dichtung aus der Dichtfläche des Hydraulikleitungsanschlussglieds und des Dichtglieds des Grundkörpers abgedichtet wird. Mit anderen Worten könnte man auch sagen, dass das Hydraulikleitungsanschlussglied und der Grundkörper ein Ventil bilden, das die Verbindung zwischen Druckraum und Entlüftungsöffnung bei vollständig eingeschraubtem Hydraulikleitungsanschlussglied schließt.

Erfindungsgemäß kann das Hydraulikleitungsanschlussglied einen Bund aufweisen, der an dem Grundkörper zur Anlage kommt, wenn das Hydraulikleitungsanschlussglied vollständig eingeschraubt ist.

Erfindungsgemäß kann das Hydraulikleitungsanschlussglied einen Anschlag und der Grundkörper einen Überlastsicherungsanschlag aufweisen, an den der Anschlag anliegt, wenn das Hydraulikleitungsanschlussglied vollständig eingeschraubt ist.

Diese Ausführung der Erfindung hat den Vorteil, dass ein Überdrehen des Hydraulikleitungsanschlussglieds verhindert wird, weil der Anschlag gegenüber einem weiteren Eindrehen des Hydraulikleitungsanschlussglieds einen sehr hohen Widerstand bietet.

Bei diesen Ausführungen der Erfindung wird das Hydraulikleitungsanschlussglied in den Grundkörper eingeschraubt. Das ist die bevorzugte Art der Montage des Hydraulikleitungsanschlussglieds in dem Grundkörper. Selbstverständlich kann das Hydraulikleitungsanschlussglied auch auf eine andere geeignete Weise an dem Grundkörper angebracht werden. Wichtig ist, dass die Art der Montage zwei Stellungen bietet, d.h. eine offene Stellung, in der eine Verbindung zwischen Druckraum und Entlüftungsöffnung besteht, und eine geschlossene Stellung, in der die Verbindung zwischen Druckraum und Entlüftungsöffnung verschlossen ist. Der Fachmann wird sich bei der Suche nach alternativen Montagetechniken beispielsweise auf dem Gebiet der Ventile Anregungen holen, denn durch die erfindungsgemäße Ausführung der Gebervorrichtung wirkt das Hydraulikleitungsanschlussglied zusammen mit dem Grundkörper im Grunde bzw. vom Prinzip her als Ventil.

Erfindungsgemäß kann in dem Hydraulikleitungsanschlussglied an der vom Druckraum abgewandten Seite des Gewindeabschnitts eine Dichtung angeordnet sein, die vorzugsweise als farbiger O-Ring ausgebildet ist.

Die Dichtung kann dabei derart angeordnet sein, dass sie in der geöffneten Stellung (des Ventils) außerhalb des Grundkörpers sichtbar und in der geschlossenen Stellung (des Ventils) in dem Grundkörper angeordnet ist, so dass eine Sichtkontrolle der Stellung des Ventils beim Befüllen bzw. Entlüften des Hydrauliksystems möglich ist. Alternativ oder zusätzlich kann die oder eine weitere Dichtung bzw. Markierung vorgesehen sein, die die Stellung des Ventils anzeigt. Alternativ oder zusätzlich zu der Sichtkontrolle kann eine Schnapphakenvorrichtung vorgesehen werden, beispielsweise durch Vorsehen eines Bunds am Ende eines Fortsatzes des Hydraulikleitungsglieds, der hinter die Schnapphaken greift, wobei die Schnapphaken beispielsweise in Form einer in den Grundkörper eingelegten Krone vorgesehen werden können.

Erfindungsgemäß kann die Gebervorrichtung einen Winkelabgang bzw. einen geteilten Abgang aufweisen. Das ist beispielsweise für eine gemeinsame Betätigung von Vorderrad- und Hinterradbremse vorteilhaft.

Erfindungsgemäß kann eine Betätigungssensoreinrichtung vorgesehen sein, die die Betätigung der Gebervorrichtung wahrnimmt. Dabei kann die Betätigungssensoreinrichtung einen Magneten und einen Hallsensor aufweisen. Alternativ oder zusätzlich können andere geeignete Betätigungssensoreinrichtungen eingesetzt werden, die dem Fachmann bekannt sind.

Bei Bremssystemen können diese Ausführungen der Erfindung beispielsweise verwendet werden, um ein Bremslicht beim Bremsen zu aktivieren.

Erfindungsgemäß kann eine Schalt- und/oder Anzeigevorrichtung zur Betätigung und/oder Anzeige des Zustands einer Fahrzeugbeleuchtung, einer Federungscharakteristik, eines Elektroantriebs vorgesehen werden. Zusätzliche Schaltbetätigungen bzw. Anzeigen von Zuständen sind denkbar.

Erfindungsgemäß kann die Gebervorrichtung eine Befestigungseinrichtung zur Befestigung der Gebervorrichtung an einem Lenker des lenkergeführten Fahrzeugs aufweisen, wobei die Befestigungseinrichtung einen Lenkerbefestigungsabschnitt zur Aufnahme des Lenkerrohrs des lenkergeführten Fahrzeugs aufweist, der einen Umfangsabschnitt des Lenkerrohrs von mehr als 180°, vorzugsweise von mehr als 181°, weiter vorzugsweise von mehr als 182° und bevorzugt von ungefähr 185° einschließt. Diese Ausbildung der Erfindung hat den Vorteil, dass die Montage der Gebervorrichtung an dem Lenkerrohr des lenkergeführten Fahrzeugs sehr einfach durchgeführt werden kann. Zur Montage kann der Befestigungsabschnitt einfach auf das Lenkerrohr aufgesteckt werden, weil der Befestigungsabschnitt infolge der Umschließung des Lenkerrohrs um etwas mehr als 180° einen gewissen Halt bietet. Anschließend kann die Gebervorrichtung durch geeignete Mittel fixiert werden. Beispielsweise kann eine Schelle mit beispielsweise zwei Schrauben an dem Befestigungsabschnitt angebracht werden, derart, dass der Befestigungsabschnitt mit der Schnelle das Lenkerrohr vollständig umschließt und infolge des Anziehens der Schrauben einklemmt. Erfindungsgemäß kann die Befestigungseinrichtung eine Schelle aufweisen, die mit dem Befestigungsabschnitt derart zusammenwirkt, dass der Befestigungsabschnitt mit der Schelle das Lenkerrohr des lenkergeführten Fahrzeugs einschließt. Erfindungsgemäß kann die Gebervorrichtung ein Gebergehäuse aufweisen, in dem ein Hydraulikzylinder und ein darin gegenüber einem Druckraum verschiebbaren Kolben angeordnet sind, wobei das Druckstück eine Drehlageraufnahme zur Aufnahme eines Lagerbolzens aufweist.

Gemäß diesen Merkmalen der Erfindung kann der Hebel über das Druckstück drehbar an dem Gebergehäuse gelagert sein.

Erfindungsgemäß kann der Grundkörper (als Funktionsteil) skelettartig bzw. gerüstartig aufgebaut sein, während die Abdeckhaube (als Designteil) im Sichtbereich optisch wertvoller gefertigt werden kann.

Erfindungsgemäß kann die Abdeckhaube den Lagerbolzen für das Druckstück sichern bzw. abdecken.

Erfindungemäß kann der Lagerbolzen durch einen Schnappmechanismus in der Abdeckhaube bzw. dem Grundkörper gesichert werden. Zum Austausch des Hebels kann der Lagerbolzen entfernbar angeordnet sein.

Erfindungsgemäß kann die Tülle einen Knickschutz für die Hydraulikleitung bereitstellen.

Erfindungsgemäß kann die Abdeckhaube schwenkbar an dem Grundkörper angeordnet sein. Das hat den Vorteil, dass der Hebel und/oder die Abdeckhaube leichter austauschbar ist.

Erfindungsgemäß kann die Abdeckhaube als Fahrtrichtungsanzeigevorrichtung (Blinker) und/oder Fahrzeugbeleuchtung ausgebildet sein. Beispielsweise könnte ein Kurvenlicht vorgesehen werden.

Erfindungsgemäß kann ein vorzugsweise automatischer Bremslichtschalter/Motorschalter (Abschaltung eines Elektromotors beim Bremsen) im Grundkörper und/oder der Abdeckhaube integriert werden. Dabei kann als Schaltelement ein Hallsensor bzw. Reedkontakt vorgesehen werden, um beispielsweise die Betätigung der Gebervorrichtung zu detektieren.

Erfindungsgemäß kann an dem Grundkörper und/oder an der Abdeckhaube eine Schalt- und/oder Anzeigevorrichtung vorgesehen werden. Beispielsweise kann eine Verschließanzeige bzw. ein Verschleißindikator vorgesehen werden. Dabei kann ein Sensor zur Erfassung des Verschleißes beispielsweise der Bremsbeläge oder der Kupplungsbeläge vorgesehen werden.

Die Ausführungen der Erfindung ohne separate zu verschließende Entlüftungsöffnung, d.h. die Ausführungen, bei denen das Hydraulikleitungsglied die Entlüftungsbohrung automatisch bei der Montage verschließt, haben den Vorteil, dass sie eine Rechts-Links-Symmetrie aufweisen können, so dass Fertigungskosten gespart werden können, weil keine verschiedenen Gebervorrichtungen für links und rechts entwickelt und produziert werden müssen.

Erfindungsgemäß kann die Abdeckhaube aus einem beliebigen Material ausgebildet sein, beispielsweise aus Kunststoff und/oder Metall und/oder Karbon und/oder Keramik und/oder Holz oder einer Kombination dieser Materialien.

Die bekannten Gebervorrichtungen geschlossener Hydrauliksysteme weisen eine Griffweiteneinstelleinrichtung auf, um den Abstand zwischen Hebel und Lenkerrohr an die Größe der Hand des Fahrers einstellen zu können.

Ein Nachteil der bekannten Gebervorrichtungen besteht darin, dass bei der Einstellung der Griffweite gleichzeitig die Nulllage des Kolbens in dem Zylinder der Gebervorrichtung verstellt wird, weshalb nach erfolgter Einstellung der Griffweite anschließend das Spiel zwischen den Bremsbelägen und der Felge eingestellt werden muss.

Bei den bekannten Gebervorrichtungen geschlossener Hydrauliksysteme wird zudem der Winkel zwischen dem Kraftübertragungsglied, das bei Betätigung der Gebervorrichtung die Kraft von dem Hebel über ein Druckstück auf den Kolben überträgt, und dem Kolben bei einer Verstellung der Griffweite verändert. Der optimale Angriffswinkel kann beispielsweise für eine mittlere Griffweite eingestellt werden. Ein Nachteil besteht jedoch darin, dass für einen optimalen Angriffswinkel werksseitig unterschiedliche Modelle für verschiedene Griffweiten hergestellt werden müssen. Ansonsten würde sich bei der Einstellung extremer Griffweiten ein nicht optimaler Angriffswinkel ergeben. Außerdem besteht der Nachteil, dass die Gebervorrichtung später nicht optimal an andere Griffweiten angepasst werden kann.

Der vorliegenden Erfindung liegt daher auch die Aufgabe zu Grunde, eine Gebervorrichtung für geschlossene Hydrauliksysteme lenkergeführter Fahrzeuge anzugeben, deren Griffweite leicht und unabhängig von der Lage des Kolbens bzw. des optimalen Angriffswinkels der Kraftübertragung auf den Kolben einstellbar ist.

Diese Aufgabe der Erfindung wird mit einer Gebervorrichtung für ein geschlossenes Hydrauliksystem lenkergeführter Fahrzeuge gemäß den Merkmalen von Anspruch 10 gelöst. Vorteilhafte Ausgestaltungen der Erfindung sind in den abhängigen Ansprüchen angegeben.

Erfindungsgemäß kann die Gebervorrichtung einen Hebel zur Betätigung der Gebervorrichtung, eine Griffweiteneinstelleinrichtung zur Einstellung der Griffweite, ein Druckstück zur drehbaren Lagerung des Hebels an der Gebervorrichtung, und eine Druckpunktverstell- und/oder Brems- oder Kupplungsbelagsnachstelleinrichtung zum Einstellen des Druckpunktes und/oder zum Ausgleichen eines Belagverschleißes aufweisen, wobei der Hebel gegenüber dem Druckstück schwenkbar angeordnet ist, wobei der Winkel zwischen dem Hebel und dem Druckstück durch die Griffweiteneinstelleinrichtung einstellbar ist, und wobei die Druckpunktverstell- und/oder Brems- oder Kupplungsbelagsnachstelleinrichtung derart ausgebildet ist, dass der Abstand zwischen dem Druckstück und dem Druckraum mittels der Druckpunktverstell- und/oder Brems- oder Kupplungsbelagsnachstelleinrichtung einstellbar ist.

Diese erfindungsgemäße Ausführung hat den Vorteil, dass die Griffweiteneinstellung unabhängig von der Druckpunktverstellung des Hydrauliksystems erfolgen kann, weil sich die Griffweite durch den Winkel zwischen dem Hebel und dem Druckstück einstellen lässt. Die Lage des Druckstücks bleibt deshalb bei der Einstellung der Griffweite unverändert. Da die Lage des Druckstücks die Angriffswinkel der Kraftübertragungskomponenten für die Kraftübertragung von dem Druckstück auf den Kolben bei der Betätigung der Gebervorrichtung definiert, kann die Kraftübertragung einschließlich der Angriffswinkel unabhängig von der Griffweite optimal eingestellt werden.

Daher weisen die erfindungsgemäßen Gebervorrichtungen auch den Vorteil auf, dass für verschiedene Griffweiten nicht verschiedene Varianten hergestellt werden müssen, um bezogen auf die Angriffswinkel der Kraftübertragungskomponenten eine optimale Kraftübertragung zu erreichen.

Die Griffweite entspricht im Rahmen der vorliegenden Anmeldung insbesondere dem Abstand des Bereichs des Hebels, an dem der Fahrer mit seinen Fingern normalerweise zur Betätigung der Gebervorrichtung angereift, zu dem Lenkerrohr des Lenkers des lenkergeführten Fahrzeugs, an dem die Gebervorrichtung angebracht ist. Der Abstand kann beispielsweise durch das Lot von dem Bereich des Hebels auf das Lenkerrohr bestimmt werden.

Erfindungsgemäß kann die Griffweiteneinstellvorrichtung einen Bolzen mit einem Anschlagsabschnitt aufweisen, der mit einem entsprechenden an dem Druckstück ausgebildeten Anschlagabschnitt zusammenwirkt.

Erfindungsgemäß kann dabei der Bolzen ein Außengewinde aufweisen und durch Drehung in einem Innengewinde des Hebels entlang seiner Längsachse verstellbar angeordnet sein.

Durch Drehen des Bolzens in dem Innengewinde des Hebels kann somit die Lage des Anschlagsabschnitts des Bolzens relativ zu dem Hebel verändert werden. Da sich der Anschlagabschnitt des Bolzens an einem entsprechenden an dem Druckstück ausgebildeten Anschlagabschnitt abstützt, kann dadurch der Winkel zwischen dem Hebel und dem Druckstück und somit die Griffweite eingestellt werden, ohne die Lage des Druckstücks bezogen auf den Kolben der Gebervorrichtung zu verändern.

Erfindungsgemäß kann die Griffweiteneinstellvorrichtung einen Eingriffsabschnitt zum Eingriff eines Werkzeugs zur Einstellung der Griffweite aufweisen. Erfindungsgemäß kann dabei der Eingriffabschnitt zum Eingriff eines Werkzeugs zur Einstellung der Griffweite in dem Bolzen ausgebildet sein.

Erfindungsgemäß kann der Eingriffabschnitt vorzugsweise als Innensechskant oder als anderer für gängige oder speziell abgestimmte Werkzeuge kompatibler Eingriffabschnitt ausgebildet sein.

Erfindungsgemäß kann die Griffweiteneinstellvorrichtung eine Vorspanneinrichtung aufweisen, die den Hebel entlang des Schwenkweges in Richtung Druckstück vorspannt. Die Vorspannung der Vorspanneinrichtung kann dabei derart erfolgen, dass der Anschlagabschnitt des Bolzens in Richtung des Anschlagabschnitts des Druckstücks vorgespannt wird.

Erfindungsgemäß kann die Gebervorrichtung eine Druckpunktverstell- und/oder Brems- oder Kupplungsbelagsnachstelleinrichtung aufweisen, die vorzugsweise einen Bolzen aufweist, der in einer Aufnahme des Druckstücks aufgenommen ist, wobei die relative Lage des Bolzens in der Aufnahme einstellbar ist. Dabei kann der Bolzen ein Gewindebolzen sein, der in einer Drehaufnahme drehbar angeordnet ist, die in der Aufnahme des Druckstücks drehbar angeordnet ist.

Die Erfindung betrifft somit auch eine hydraulische Bremse und/oder eine hydraulische Fahrradbremse und/oder eine hydraulische Fahrradfelgenbremse und/oder eine hydraulische Fahrradscheibenbremse und/oder eine hydraulische Kupplung und/oder eine hydraulische Elektrofahrradbremse und/oder ein Fahrrad und/oder ein Elektrofahrrad und/oder ein Motorrad mit zumindest einer erfindungsgemäßen Gebervorrichtung. Die erfindungsgemäße Gebervorrichtung kann dabei eine von einer Belagnachstelleinrichtung und/oder Druckpunkteinstelleinrichtung in Bezug auf die Einstellbarkeit unabhängige Griffweiteneinstellvorrichtung aufweisen, die vorzugsweise über ein gemeinsames Druckstück miteinander verbunden sind. Beispielsweise kann der Hebel der Gebervorrichtung zweiteilig aus einem Hebelglied und einem Druckstückglied ausgebildet sein, wobei sich das Druckstück an dem Grundkörper und/oder Gehäuse der Gebervorrichtung abstützt und das Hebelglied gegenüber dem Druckstück derart verschwenkbar ist, dass nach erfolgter Einstellung eines Winkels zwischen Hebelglied und Druckstück das Hebelglied gemeinsam mit dem Druckstück um einen gemeinsamen Drehpunkt wie ein normaler Hebel zur Betätigung der Gebervorrichtung gedreht werden kann (derart, dass der Hebel in Richtung Lenkerrohr bewegt wird). An dem Druckstück ist außerdem ein Ende der Belagnachstelleinrichtung und/oder Druckpunkteinstelleinrichtung angelenkt. Da die Lage des Druckstücks bei der Griffweiteneinstellung nicht verändert wird, wird bei einer Einstellung der Griffweite die Einstellung der Lage des Belags (beispielsweise Bremsbelag oder Kupplungsbelag) und/oder des Druckpunkts des Hydrauliksystems nicht verändert. Die jeweiligen Einstellungen können somit unabhängig voneinander erfolgen.

Die Erfindung wird im Folgenden anhand der in den Figuren dargestellten Ausführungsbeispiele näher beschrieben:
- Fig. 1: zeigt eine Schnittansicht einer Gebervorrichtung für ein Hydraulikbremssystem lenkergeführter Fahrzeuge gemäß einer ersten Ausführung der Erfindung.
- Fig. 2: zeigt eine Seitenansicht der Gebervorrichtung von Fig. 1 von außen.
- Fig. 3: zeigt eine Schnittansicht einer Gebervorrichtung für ein Hydraulikbremssystem lenkergeführter Fahrzeuge gemäß einer weiteren Ausführung der Erfindung.
- Fig. 4: zeigt eine Schnittansicht einer Gebervorrichtung für ein Hydraulikbremssystem lenkergeführter Fahrzeuge gemäß einer Ausführung der Erfindung, die im Wesentlichen der Ausführung der Figuren 1 und 2 entspricht.
- Fig. 5: eine perspektivische Ansicht der Abdeckhaube des Ausführungsbeispiels von Fig. 1.
- Fig. 6: eine perspektivische Ansicht der Abdeckhaube des Ausführungsbeispiels von Fig. 1.
- Fig. 7: zeigt eine Schnittansicht der Ausführung von Fig. 1 von dem Grundkörper mit einem teilweise eingeschraubten Hydraulikleitungsanschlussglied.
- Fig. 8: zeigt eine Schnittansicht der Ausführung von Fig. 1 von dem Grundkörper mit einem vollständig eingeschraubten Hydraulikleitungsanschlussglied.
- Fig. 9: zeigt eine perspektivische Schnittansicht der Ausführung von Fig. 1 von dem Grundkörper ohne Hydraulikleitungsanschlussglied.
- Fig. 10: zeigt eine perspektivische Schnittansicht der Ausführung von Fig. 1 von dem Grundkörper mit einem vollständig eingeschraubten Hydraulikleitungsanschlussglied.
- Fig. 11: zeigt eine Schnittansicht einer alternativen Ausführung der Erfindung, die bis auf die Unterschiede der Ausführungsformen der Fig. 7 entspricht, wobei der Grundkörper mit einem teilweise eingeschraubten Hydraulikleitungsanschlussglied dargestellt ist.
- Fig. 12: zeigt eine Schnittansicht einer alternativen Ausführung der Erfindung, die bis auf die Unterschiede der Ausführungsformen der Fig. 8 entspricht, wobei der Grundkörper mit einem vollständig eingeschraubten Hydraulikleitungsanschlussglied dargestellt ist.

In der Beschreibung der Ausführungsbeispiele werden folgende Bezugszeichen verwendet:
- 1: Hydraulikleitung
- 10: Leitungsanschlussglied
- 11: Anschlussstutzen
- 12: Fortsatz
- 13: Dichtungsfläche
- 14: Gewindeabschnitt (Außengewinde)
- 15: Anschlag
- 16: Dichtung (O-Ring, vorzugsweise farbig)
- 17: Nut
- 20: Verschlussglied
- 30: Hebel
- 31: Betätigungsabschnitt
- 39: Richtung des Hebels
- 40: Druckstück
- 41: Anschlag
- 42: Drehlageraufnahme
- 43: Anschlagabschnitt (für Bolzen 71 der Griffweiteneinstelleinrichtung)
- 44: Aufnahme für Druckpunktverstell- und/oder Brems- oder Kupplungsbelagsnachstelleinrichtung
- 49: Richtung des Druckstücks (hier beispielsweise parallel zur Richtung des Lenkerrohrs
- 50: Druckpunktverstell- und/oder Brems- oder Kupplungsbelagsnachstelleinrichtung
- 51: Gewindebolzen
- 52: Drehaufnahme mit Innengewinde für Gewindebolzen 51
- 53: Drehkopf
- 54: Gewindebolzenkopf
- 59: Richtung des Bolzens
- 60: Kolben
- 61: Druckraum
- 62: Rückstellfeder
- 63: Dichtung
- 64: Bolzenaufnahme (für Gewindebolzenkopf 54)
- 65: Krone bzw. Wegbegrenzung
- 70: Griffweiteneinstelleinrichtung
- 71: Bolzen
- 72: Eingriffabschnitt (vorzugsweise Innensechskant)
- 73: Anschlagabschnitt
- 74: Vorspanneinrichtung
- 80: Grundkörper
- 81: Druckstückanschlag
- 82: Lagerbolzen (für Druckstück)
- 83: Dichtungsglied
- 84: Gewindeabschnitt (Innengewinde zur Aufnahme des Leitungsanschlussglieds)
- 85: Überlastsicherungsanschlag
- 86: Hydraulikzylinder
- 87: Entlüftungsöffnung
- 89: Richtung des Hydraulikzylinders
- 90: Tülle
- 100: Abdeckhaube
- 101: Drehgelenk
- 102: Schnappbefestigungsglied
- 110: Betätigungssensoreinrichtung
- 111: Magnet
- 112: Hallsensor
- 120: Befestigungseinrichtung
- 121: Lenkerrohrbefestigungsabschnitt
- 122: Schelle
- 130: kombinierte Schalt- und Anzeigeeinrichtung
- 210: Leitungsanschlussglied
- 211: Anschlussstutzen
- 212: Fortsatz
- 213: Dichtung (beispielsweise O-Ring)
- 214: Gewindeabschnitt (Außengewinde)
- 215: Anschlag
- 218: Bund
- 260: Kolben
- 261: Druckraum
- 262: Rückstellfeder
- 263: Dichtung
- 264: Bolzenaufnahme (für Gewindebolzenkopf)
- 265: Krone bzw. Wegbegrenzung
- 280: Grundkörper
- 283: Dichtungsfläche
- 284: Gewindeabschnitt (Innengewinde zur Aufnahme des Leitungsanschlussglieds 210)
- 285: Überlastsicherungsanschlag
- 286: Hydraulikzylinder
- 287: Entlüftungsöffnung
- α: Winkel zwischen Hebel 30 und Druckstück 40 bezogen auf eine Drehachse um Lagerbolzen 82

- β: Winkel zwischen Bolzen 51 und Hydraulikzylinder 86 bezogen auf den Angriffspunkt des Gewindebolzenkopfs 54 an der Bolzenaufnahme 64 des Kolbens 60

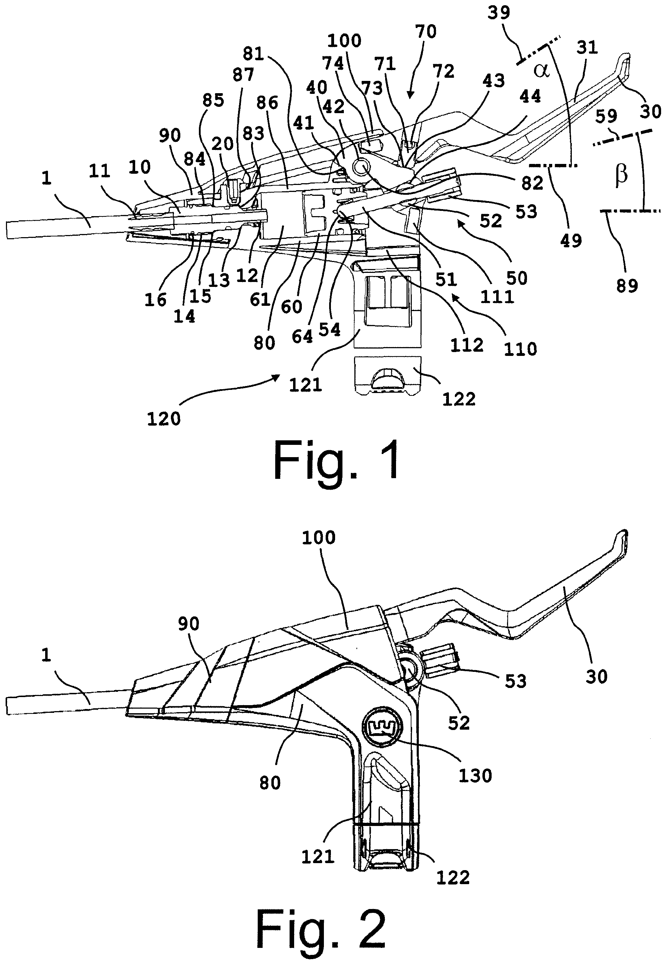

Die Figuren 1 und 2 zeigen eine Gebervorrichtung für ein Hydraulikbremssystem lenkergeführter Fahrzeuge gemäß einer ersten Ausführung der Erfindung.

Die Gebervorrichtung weist einen Grundkörper 80 auf, der einen Hydraulikzylinder 86 definiert, in dem ein Druckraum 61 und ein darin verschiebbar gelagerter Kolben 60 angeordnet ist, der auf bekannte Weise mit einer Dichtung 63 gegenüber dem Hydraulikzylinder 86 abgedichtet ist.

An der Gebervorrichtung ist eine Hydraulikleitung 1 angeschlossen, die an eine nicht dargestellte Nehmervorrichtung angeschlossen ist. Die Nehmervorrichtung kann beispielsweise ein Bremszylinder einer hydraulischen Fahrradfelgenbremse sein. Denkbar wäre auch ein Bremssattel einer hydraulischen Fahrradscheibenbremse und/oder Motorradscheibenbremse. Alternativ könnte die Nehmervorrichtung auch ein Teil eines hydraulischen Kupplungssystems sein.

Die Hydraulikleitung 1 ist an der Gebervorrichtung mittels eines Leitungsanschlussglieds 10 angeschlossen, das einen Anschlussstutzen 11 aufweist, auf das die Hydraulikleitung 1 aufgepresst ist. Das Leitungsanschlussglied 10 weist ferner einen Gewindeabschnitt 14 mit einem Außengewinde auf mit dem das Leitungsanschlussglied 10 in einen entsprechenden Gewindeabschnitt 84, der ein Innengewinde zur Aufnahme des Leitungsanschlussglieds 10 aufweist, des Grundkörpers 80 eingeschraubt ist. An den Gewindeabschnitt 14 des Leitungsanschlussglieds schließt sich Anschlag 15 an, der mit einem Überlastsicherungsanschlag 85 zusammenwirkt, um ein zu starkes Eindrehen des Leitungsanschlussglieds 10 in den Grundkörper 80 zu verhindern.

In einer Nut des Leitungsanschlussglieds 10 ist ein vorzugsweise farbiger O-Ring 16 vorgesehen, der einerseits eine Abdichtung gegenüber Hydraulikflüssigkeit bietet und andererseits eine optische Kontrolle bietet, dass das Leitungsanschlussglied hinreichend weit in den Grundkörper 80 eingedreht ist, wenn der vorzugsweise farbige O-Ring nicht mehr sichtbar ist, weil er von dem Grundkörper 80 abgedeckt ist.

An einem Fortsatz 12 weist das Leitungsanschlussglied 10 eine Dichtungsfläche 13 auf, die mit einem Dichtungsglied 83 des Grundkörpers zusammenwirkt, um das in den Grundkörper 80 mit dem Fortsatz 12 eintauchende Leitungsanschlussglied 10 abzudichten. Dazu wird das Dichtungsglied 83 durch den Eingriff mit der Dichtungsfläche 13 elastisch verformt.

Der Grundköper 80 kann vorzugsweise aus einem Kunststoff oder einem geeigneten Metall ausgebildet sein. Eine Kombination verschiedener Materialien ist denkbar. Der Kunststoff kann Polyamide aufweisen. Ein Faseranteil von bis zu 50% ist denkbar. Normalerweise sollte der Faseranteil weniger als 30% betraqen. Glasfasern und/oder Kohlefasern können beispielsweise eingesetzt werden.

In dem Grundkörper 80 ist ferner eine Entlüftungsöffnung 87 vorgesehen, die beim Eindrehen des Leitungsanschlussglieds 10 in den Grundkörper 80 mit der Dichtfläche 13 überfahren wird. Dadurch wird die Entlüftungsöffnung 87 durch das Eindrehen des Leitungsanschlussglieds 10 gegenüber dem Druckraum 61 abgedichtet, weil die Dichtfläche 13 mit dem Dichtungsglied 83 zusammenwirkt.

Beim Befüllen wird das Leitungsanschlussglied 10 zunächst nur soweit in den Grundkörper 80 eingedreht, dass der farbige O-Ring 16 noch vollständig sichtbar ist und eine Verbindung zwischen dem Druckraum 61 und der Entlüftungsöffnung 87 besteht. Sobald beim Befüllen Hydraulikflüssigkeit aus der Entlüftungsöffnung 87 blasenfrei austritt, ist das ein Zeichen, dass das System vollständig befüllt und entlüftet ist. Daher kann dann das Leitungsanschlussglied 10 weiter in den Grundkörper 80 eingedreht werden, bis der O-Ring 16 nicht mehr sichtbar ist und die Dichtfläche 13 mit dem Dichtungsglied 83 des Grundköpers 80 zusammenwirkt, um die Entlüftungsöffnung 20 abzudichten. Um etwaige in der Entlüftungsöffnung noch vorhandene Hydraulikflüssigkeit am Austreten zu hindern, kann die Entlüftungsöffnung mit einem Verschlusstopfen 20 verschlossen werden.

Sollte nach dem Befüllen des Systems ein Entlüften des Systems notwendig werden, kann das Leitungsanschlussglied 10 so weit aus dem Grundkörper gedreht werden, bis der farbige O-Ring sichtbar wird. Anschließend kann durch die Entlüftungsöffnung Gas abgesaugt werden und/oder Hydraulikflüssigkeit eingefüllt werden und/oder Hydraulikflüssigkeit nehmerseitig in das System eingebracht werden.

Die Entlüftungsöffnung 87 kann beispielsweise einen Konus aufweisen, vorzugsweise einen Luerkonus, so dass die Entlüftungsöffnung 87 mit einem handelsüblichen Verschlussstopfen 20 verschlossen werden kann.

Die Ausbildung der Entlüftungsöffnung 87 als Luerkonus hat den weiteren Vorteil, dass beim Befüllen bzw. Entlüften in die Entlüftungsöffnung beispielsweise eine handelsübliche Spritze eingesetzt werden kann, um saugend das Befüllen bzw. Entlüften des Hydrauliksystems zu unterstützen. Die Verwendung eines Luerkonus zum Befüllen und Entlüften offener Bremssysteme ist beispielsweise in den beiden Anmeldungen DE 10 2006 040 327 A1 und DE 10 2006 040 328 A1 beschrieben.

Die Gebervorrichtung weist eine Griffweiteneinstelleinrichtung 70 auf.

Die Gebervorrichtung weist ferner einen Hebel 30 mit einem Betätigungsabschnitt 31 auf. Der Hebel 30 ist über ein Druckstück 40 an dem Grundkörper 80 drehbar gelagert. Dazu weist das Druckstück 40 eine Drehlageraufnahme 42 auf, in der ein Lagerbolzen 82 aufgenommen ist. Der Lagerbolzen 82 kann an dem Grundkörper 80 auf eine dem Fachmann bekannte Weise befestigt sein und beispielsweise auch einstückig mit dem Grundkörper 80 ausgebildet sein.

Das Druckstück 40 liegt im unbetätigten Zustand der Gebervorrichtung mit einem Anschlag 41 an einem Druckstückanschlag 81 des Grundkörpers 80 an.

Zur Betätigung der Gebervorrichtung greift der Fahrer mit seinen Fingern an dem Betätigungsabschnitt 31 an und zieht bzw. drückt den Hebel 30 in Richtung des nicht dargestellten Lenkerrohrs, an dem die Gebervorrichtung befestigt ist.

Um die Gebervorrichtung an den Fahrer optimal anzupassen, sollte die Griffweite für den jeweiligen Fahrer eingestellt werden, um der unterschiedlichen Länge der Finger Rechnung zu tragen.

Mit der Griffweiteneinstelleinrichtung 70 kann der Winkel α zwischen dem Hebel 30 und dem Druckstück 40 bezogen auf eine Drehachse um den Lagerbolzen 82 eingestellt werden.

Bei dem Winkel α wurde die Richtung 39 des Hebels 30 als die Richtung des Betätigungsabschnitts 31 angenommen, an dem der Fahrer den Hebel bei der Betätigung der Gebervorrichtung angreift. Die Richtung 49 des Druckstücks 40 wurde parallel zu der Richtung des Lenkerrohrs in dem Abschnitt definiert, an dem die Gebervorrichtung angebracht ist. In Fig. 1 eingezeichnet ist der Winkel α bezogen auf den durch die Drehlageraufnahme 42 bzw. den Lagerbolzen 82 definierte Drehachse zwischen Hebel 30 und Druckstück 40. Andere Definitionen des Winkels α sind denkbar. Wichtig ist, dass der Winkel und damit der Abstand des Betätigungsabschnitts 31 des Hebels 30 von dem Lenkerrohr einstellbar ist.

Die Griffweiteneinstelleinrichtung 70 weist einen Bolzen 71 auf, der in den Hebel in eine Bohrung eingeschraubt ist. An seinem vom Lenkerrohr abgewandten Ende weist der Bolzen 71 einen Eingriffabschnitt 72 auf, der vorzugsweise als Innensechskant ausgebildet ist. An seinem anderen Ende weist der Bolzen 71 einen Anschlagabschnitt 73 auf, mit der sich der Bolzen 71 an einem entsprechenden Anschlagabschnitt 43 entgegen der Kraft einer Vorspanneinrichtung 74 abstützt. Zur Veränderung der Griffweite kann einfach der Bolzen 71 in der in dem Hebel ausgebildeten Bohrung verdreht werden, so dass sich der Winkel α zwischen der Richtung 39 des Hebels 30 und der Richtung 49 des Druckstücks 40 ändert, ohne die Position des Druckstücks 40 zu beeinflussen.

Die Gebervorrichtung weist ferner eine Druckpunktverstell- und/oder Brems- oder Kupplungsbelagsnachstelleinrichtung 50 auf. Bei hydraulischen Bremssystemen kann die Druckpunktverstell- und/oder Brems- oder Kupplungsbelagsnachstelleinrichtung 50 beispielsweise dafür verwendet werden, um eine Abnutzung der Bremsbeläge auszugleichen. Entsprechend kann bei Kupplungssystemen eine Abnutzung der Kupplungsreibbeläge ausgeglichen werden.

In dem Druckstück 40 ist eine Aufnahme 44 für die Druckpunktverstell- und/oder Brems- oder Kupplungsbelagsnachstelleinrichtung 50 vorgesehen.

Die Druckpunktverstell- und/oder Brems- oder Kupplungsbelagsnachstelleinrichtung 50 weist einen Gewindebolzen 51 auf, der ein Außengewinde aufweist, das in einer Drehaufnahme 52 mit einem Innengewinde angeordnet ist. Die Drehaufnahme 52 ist drehbar in der Aufnahme 44 des Druckstücks 40 aufgenommen.

Der Gewindebolzen 51 weist einen Gewindebolzenkopf 54 auf, der in eine entsprechende Bolzenaufnahme 64 des Kolbens 61 eingreift. Durch Drehen des Gewindebolzens 51 in der Drehaufnahme 52 kann der Gewindebolzen 51 in Richtung des Kolbens 61 verstellt werden, so dass der Druckpunkt der Gebervorrichtung bzw. die Nulllage der Gebervorrichtung verändert werden kann. Dadurch kann beispielsweise der Verschleiß von Brems- bzw. Kupplungsbelägen kompensiert werden.

Zur Betätigung der Druckpunktverstell- und/oder Brems- oder Kupplungsbelagsnachstelleinrichtung 50 ist ein Drehknopf 53 an dem dem Gewindebolzenkopf 54 gegenüberliegenden Ende des Gewindebolzens 51 vorgesehen.

Der Winkel β zwischen der Richtung des Gewindebolzens 51 und der Richtung des Hydraulikzylinders 86 bezogen auf den Angriffspunkt des Gewindebolzenkopfs 54 an der Bolzenaufnahme 64 des Kolbens 60 verändert sich während der Betätigung der Gebervorrichtung.

Bei dem Winkel β wurde als Richtung des Gewindebolzens 51 die Richtung parallel zu der Längsachse bzw. Hauptachse des Gewindebolzens angenommen. Als Richtung des Hydraulikzylinders 86 wird die Richtung entlang der Zylinderhauptachse bzw. die Richtung, in der der Kolben verschiebbar angeordnet ist, angenommen. Der Winkel ist bezogen auf den Angriffspunkt des Gewindebolzenkopfs 54 an der Bolzenaufnahme 64 des Kolbens 60 definiert.

Optimalerweise wäre der Winkel β während der Betätigung der Gebervorrichtung immer nahezu Null Grad. Das ist praktisch nicht zu erreichen. Daher wird der Winkel β derart eingestellt, dass am Anfang der Betätigung der Winkel β klein ist und während der Betätigung kleiner bzw. Null wird. Der Winkel β kann auch zumindest innerhalb eines kurzen Abschnitts der Betätigung in die andere Richtung weisen, d.h. dass die Richtung 59 in Fig. 1 unterhalb der Richtung 89 wäre und von rechts unten nach links oben zeigt. Am Ende der Betätigung kann der Winkel β wieder größer werden bzw. seine Richtung wechseln und dann wieder größer werden.

Da die Griffweiteneinstellvorrichtung die Lage des Druckstücks 40 bei einer Verstellung der Griffweite unverändert lässt, bleibt der Winkel β dabei unverändert.

Um die Gebervorrichtung nach außen anzuschließen, ist im Bereich des Leitungsanschlussglieds 10 eine Tülle 90 vorgesehen, die die Hydraulikleitung 1 und den vorderen Bereich des Grundkörpers 80 umschließt. Im hinteren Bereich ist eine Abdeckhaube 100 vorgesehen.

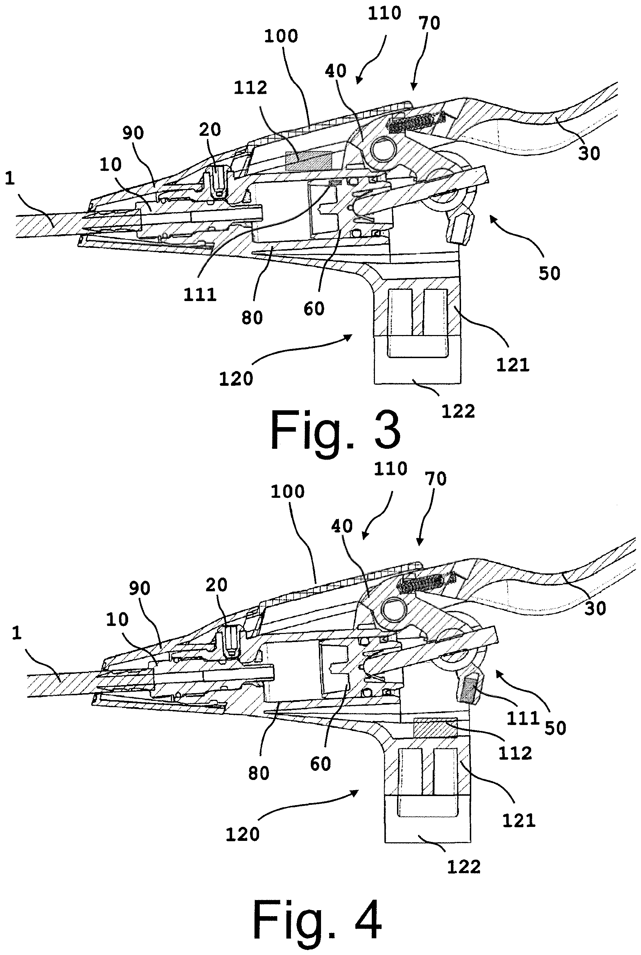

Die Gebervorrichtung weist vorteilhafterweise auch eine Betätigungssensoreinrichtung 110 auf. Die Betätigungssensoreinrichtung 110 kann beispielsweise einen Magneten 111 und einen Hallsensor 112 umfassen, der eine Annäherung des Magneten an den Hallsensor und damit eine Betätigung der Gebervorrichtung erfasst. Alternativ oder zusätzlich kann auch ein Reed-Kontakt eingesetzt werden. Mögliche Orte zur Anordnung von Magnet-Hallsensor-Paaren sind in den Figuren 3 und 4 gezeigt, die alternativ oder in beliebiger Kombination verwendet werden können. Diese Figuren sollen im Wesentlichen nur unterschiedliche Anordnungen der Betätigungssensoreinrichtung 110 zeigen, daher wird im Übrigen auf die Beschreibung im Zusammenhang mit den Figuren 1 und 2 verwiesen.

Bei Ausführungen, in denen der Kolben nicht verdrehsicher in dem Zylinderraum aufgenommen ist, können auch umfangssymmetrische Signalgeber vorgesehen werden, beispielsweise 2 Magnethalbschalen oder umlaufende Magneten oder andere dem Fachmann bekannte Signalgeber bzw. Stellungsgeber, die zur Erfassung von Positionen bzw. Stellungen eingesetzt werden.

Erfindungsgemäß kann eine Verdrehsicherung des Kolbens auch derart ausgebildet sein, dass der Kolben zusätzlich gegen ein Herausfallen aus dem ihn aufnehmenden Zylinderraum gesichert wird.

Gemäß der Ausführung von Fig. 3 könnte der Magnet 111 in dem Kolben 60 und der Hallsensor 112 unter der Abdeckhaube 100 außerhalb des Grundkörpers 80 angeordnet sein.

Gemäß der Ausführung von Fig. 4 könnte der Magnet 111 in einem Fortsatz des Druckstücks 40 und der Hallsensor 112 in dem Grundkörper 80 oberhalb der Befestigungseinrichtung 120 vorgesehen sein.

Bei Gebervorrichtungen für Bremssysteme könnte das Betätigungssignal beispielsweise als Signal zum Einschalten eines Bremslichtes verwendet werden.

Die Gebervorrichtung weist ferner eine Befestigungseinrichtung 120 mit einem Lenkerrohrbefestigungsabschnitt 121 auf, der mit einer Schelle 122 an dem Lenkerrohr befestigt werden kann. Der Lenkerrohrbefestigungsabschnitt 121 weist einen Umschließungswinkel von ungefähr 185° auf, Dadurch ist es möglich, zur Montage der Gebervorrichtung, einfach den Lenkerrohrbefestigungsabschnitt 121 an dem Lenkerrohr anzuklemmen und anschließend mit der Schelle 122 zu sichern, die beispielsweise mittels zweier Schrauben an dem Lenkerrohrbefestigungsabschnitt 121 befestigt wird, die bezogen auf das Lenkerrohr auf gegenüberliegenden Seiten der Schelle 122 angeordnet sind. Fig. 1 zeigt einen Zustand vor der Verbindung des Lenkerrohrbefestigungsabschnitts 121 mit der Schelle 122 und Fig. 2 zeigt einen Zustand, bei dem die Schelle an dem Lenkerrohrbefestigungsabschnitt 121 angebracht ist.

In dem Grundkörper 80 ist ferner eine kombinierte Schalt- und Anzeigeeinrichtung 130 vorgesehen. Alternativ kann auch nur eine Schalt- oder Anzeigeeinrichtung vorgesehen sein, oder es können mehrere Einrichtungen zur Anzeige bzw. zum Schalten vorgesehen sein.

Geschaltet bzw. angezeigt werden kann beispielsweise die gewählte Federcharakteristik einer Federgabel.

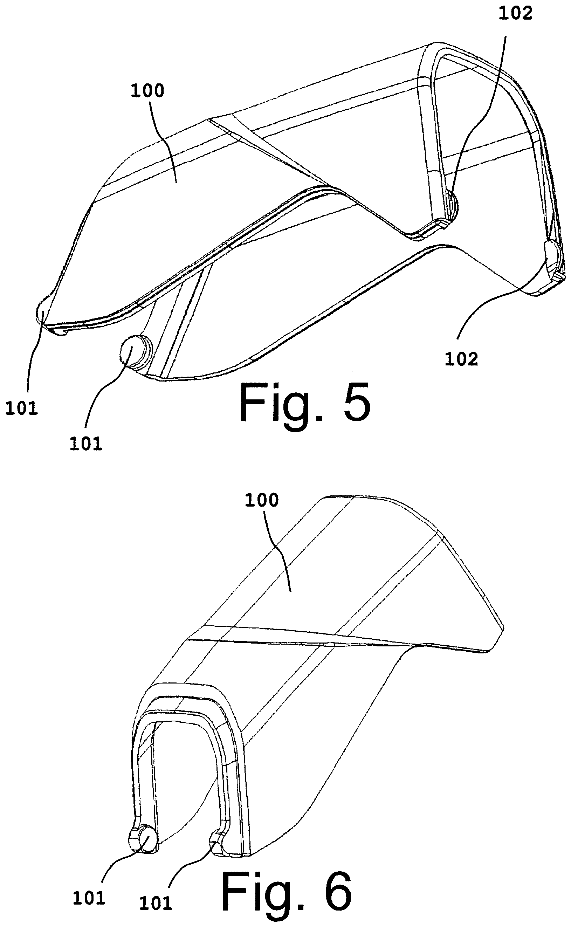

Die Figuren 5 und 6 zeigen die Abdeckhaube 100 der erfindungsgemäßen Ausführung von Fig. 1 im Detail. Die Abdeckhaube 100 weist zwei Drehgelenke 101 zur Aufnahme in entsprechende Aufnahmen des Grundkörpers 80 und/oder der Tülle 90 auf. Des Weiteren weist die Abdeckhaube 100 an ihrem entgegengesetzten Ende zwei Schnappbefestigungsglieder 102 auf, die bei der Montage der Abdeckhaube in entsprechende beispielsweise am Grundkörper 80 vorgesehene Aufnahmen eingreifen.

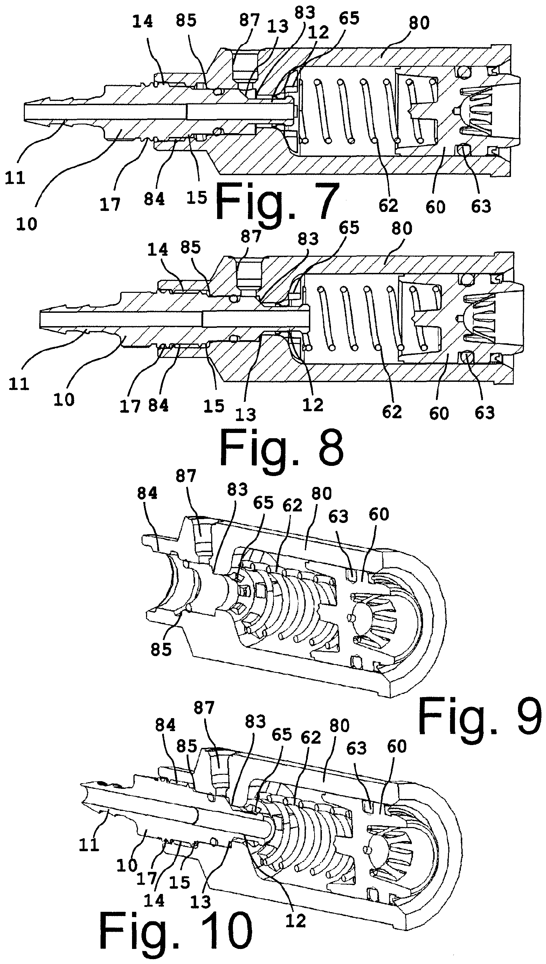

Die Figuren 7 und 8 zeigen den Grundkörper 80 mit einem teilweise eingeschraubten Hydraulikleitungsanschlussglied 10 bzw. einem vollständig eingeschraubten Hydraulikleitungsanschlussglied. Man erkennt somit in Fig. 7 die Offenstellung des Ventils und in Fig. 8 die Geschlossenstellung des Ventils. Zusätzlich zu Fig. 1 ist die Rückstellfeder 62 und die Dichtung 63 dargestellt.

Die Figuren 9 und 10 zeigen perspektivische Schnittansichten des Grundkörpers 80, wobei in Fig. 9 das Hydraulikanschlussglied weggelassen ist und in Fig. 10 in vollständig eingeschraubter Stellung (d.h. in geschlossener Stellung des Ventils) gezeigt ist.

Man erkennt, dass die Krone 65 als zusätzliche Sicherung der geschlossenen Stellung hinter einen Bund am Ende des Fortsatzes 12 des Hydraulikleitungsanschlussglieds greift. Die Krone 65 fungiert als Wegbegrenzung für den Fortsatz 12 bzw. das Hydraulikleitungsanschlussglied 10.

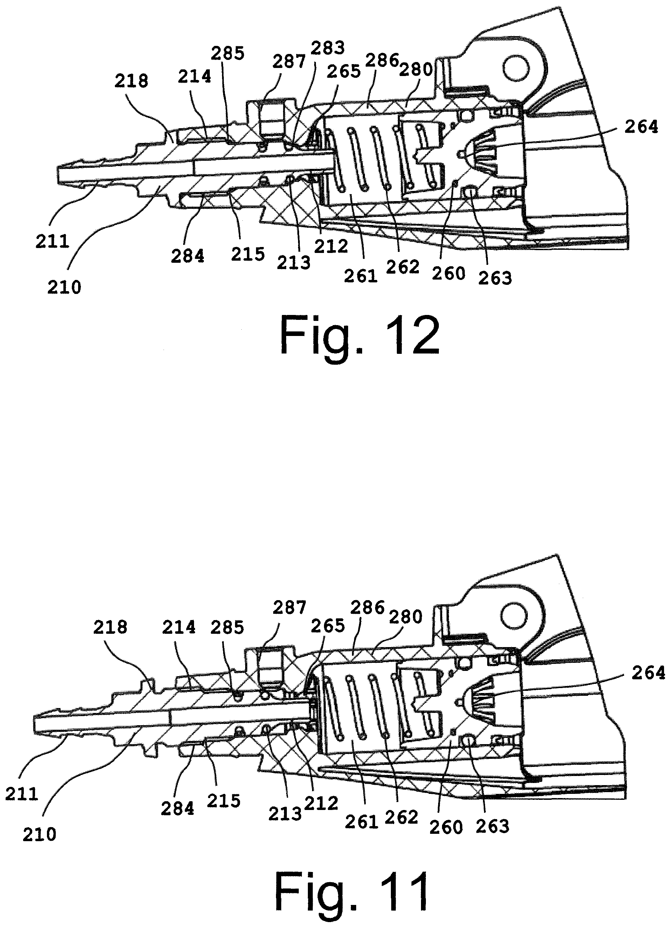

Die Figuren 11 bis 12 zeigen eine weitere Ausführung der Erfindung, die im Wesentlichen der unter anderem in den Figuren 7 und 8 gezeigten Ausführung entspricht. Die entsprechenden Teile sind mit gleichen Bezugszeichen bezeichnet, die um 200 erhöht sind. Im Folgenden werden nur die Unterschiede zu der Ausführung der Figuren 7 und 8 beschrieben und im Übrigen auf deren Beschreibung verwiesen.

Die in den Figuren 11 und 12 gezeigte Ausführung der Erfindung weist anstelle der Dichtungsfläche 13 und des damit zusammenwirkenden Dichtungsglieds 83 (siehe Figuren 7 und 8) eine Dichtung 213 (beispielsweise einen O-Ring) und eine damit zusammenwirkende Dichtungsfläche 283 auf. Die Dichtung 213 bildet mit der Dichtungsfläche 283 ein Ventil, das in der in Figur 11 gezeigten Stellung offen ist, d.h. die Verbindung zwischen der Entlüftungsöffnung 287 und dem Druckraum 261 freigibt, und das in der in Figur 12 gezeigten Stellung geschlossen ist, d.h. die Verbindung zwischen der Entlüftungsöffnung 287 und dem Druckraum 261 verschließt.

Das Leitungsanschlussglied 210 weist einen Bund 218 auf, der in der in Fig. 12 gezeigten Stellung an den Grundkörper 280 anstößt bzw. angrenzt. Dadurch wird ein Überdrehen des Hydraulikanschlussglieds 210 in den Grundkörper 280 durch den Anschlag des Bunds 218 an den Grundkörper 280 verhindert.

Es ist klar, dass dem Fachmann beim Studium der Unterlagen naheliegende Alternativen und äquivalente Lösungen auch in den Schutzbereich der vorliegenden Anmeldung fallen sollen. Beispielsweise könnte der Stopfen 20 in der Tülle 90 integriert werden.

Die Erfindung betrifft somit auch eine Gebervorrichtung insbesondere einer hydraulischen Fahrradfelgenbremse mit einer Bremsbelagnachstelleinrichtung und einer davon unabhängigen Griffweiteneinstelleinrichtung (d.h. dass die Einstellung der Griffweite die Einstellung der Beläge nicht beeinflusst) sowie einem Druckstück, das sich an dem Grundkörper der Gebervorrichtung abstützt und den Hebel der Gebervorrichtung abstützt sowie einen Teil der Bremsbelagnachstelleinrichtung aufnimmt. Die Griffweiteneinstellvorrichtung definiert dabei einen bestimmten festen Winkel zwischen dem Hebel und dem Druckstück. Das Druckstück und damit der Hebel sind an dem Grundkörper der Gebervorrichtung drehbar gelagert. Die Bremsbelagnachstellung kann unabhängig von der Griffweiteneinstellung erfolgen, denn durch die Einstellung der Griffweite verändert sich die Lage des Druckstücks nicht. Vorteilhafterweise greift die Bremsbelagsnachstelleinrichtung an dem Druckstück an.

Erfindungsgemäß kann die Bremsbelagnachstelleinrichtung bzw. die Druckpunkteinstelleinrichtung ohne die Verwendung von Werkzeugen (werkzeuglos) betätigt werden.

Die Erfindung betrifft somit auch eine Gebervorrichtung insbesondere einer hydraulischen Fahrradfelgenbremse mit einer Griffweiteneinstelleinrichtung und einer davon unabhängig einstellbaren Belagnachstell- und/oder Druckpunkteinstelleinrichtung.

Die Erfindung betrifft somit auch eine Betätigungsarmatur, insbesondere für hydraulische Felgenbremsen für ein Fahrrad, mit einem Armaturgehäuse, das Befestigungsmittel zur Befestigung der Betätigungsarmatur an einem Lenkerrohr, einer Lenkstange oder einem ähnlichen Lenkglied eines lenkergeführten Fahrzeugs aufweist, einem an dem Armaturgehäuse drehbar gelagerten Handhebel, einer an dem oder in dem Armaturgehäuse angeordneten hydraulischen Kraftübertragungsvorrichtung, und einem Druckstück, das eine für den Handhebel und das Druckstück gemeinsame Drehlagerung aufweist, wobei an dem Druckstück und dem Handhebel (oder zwischen dem Druckstück und dem Handhebel) die eine Griffweiteneinstellvorrichtung und an dem Druckstück und der hydraulischen Kraftübertragungsvorrichtung (oder zwischen dem Druckstück und der hydraulischen Kraftübertragungsvorrichtung) eine Belagnachstell- und/oder Druckpunkteinstelleinrichtung vorgesehen ist. Diese Ausführung der Erfindung hat den Vorteil, dass die Griffweite unabhängig von der Lage des Belags bzw. dem Druckpunkt des Systems einstellbar ist. In der Nulllage (unbetätigter Zustand) stützt sich das Druckstück an dem Gehäuse ab und definiert somit eine feste Ausgangsstellung für die Einstellung der Lage des Belags bzw. des Druckpunkts des hydraulischen Kraftübertragungssystems.

## Patentansprüche

1. Gebervorrichtung für ein geschlossenes Hydrauliksystem lenkergeführter Fahrzeuge mit
einem Druckraum (61), in dem bei Betätigung der Gebervorrichtung zur Betätigung einer Nehmervorrichtung Hydraulikflüssigkeit unter Druck gesetzt wird,
einem Hydraulikleitungsanschlussglied (10), das einen Anschlussstutzen (11) zum Anschluss einer Hydraulikleitung (1) und einen Gewindeabschnitt (14) zum Eindrehen in einen Grundkörper (80) der Gebervorrichtung aufweist, und
einer Entlüftungsöffnung (87) zum Entlüften des Hydrauliksystems,
**dadurch gekennzeichnet, dass** das Hydraulikleitungsanschlussglied und der Grundkörper ein Ventil bilden, das die Verbindung zwischen Druckraum und Entlüftungsöffnung bei vollständig eingeschraubtem Hydraulikleitungsanschlussglied schließt, und/oder **dadurch gekennzeichnet, dass** das Hydraulikleitungsanschlussglied (10) eine Dichtungsfläche (13) und der Grundkörper ein Dichtungsglied (83) aufweisen, die miteinander derart zusammenwirken, dass der Druckraum (61) gegenüber der Entlüftungsöffnung (87) abgedichtet ist, wenn das Hydraulikleitungsanschlussglied (10) vollständig in den Grundkörper (80) eingeschraubt ist, und dass der Druckraum (61) mit der Entlüftungsöffnung (87) in Verbindung steht, wenn das Hydraulikleitungsanschlussglied (10) in einer teilweise eingeschraubten Stellung angeordnet ist und/oder **dadurch gekennzeichnet, dass** das Hydraulikleitungsanschlussglied (210) eine Dichtung (213) und der Grundkörper (280) eine Dichtungsfläche (283) aufweisen, die miteinander derart zusammenwirken, dass der Druckraum (261) gegenüber der Entlüftungsöffnung (287) abgedichtet ist, wenn das Hydraulikleitungsanschlussglied (210) vollständig in den Grundkörper (280) eingeschraubt ist, und dass der Druckraum (261) mit der Entlüftungsöffnung (287) in Verbindung steht, wenn das Hydraulikleitungsanschlussglied (210) in einer teilweise eingeschraubten Stellung angeordnet ist.

2. Gebervorrichtung für ein geschlossenes Hydrauliksystem lenkergeführter Fahrzeuge nach dem vorhergehenden Anspruch, bei der das Hydraulikleitungsanschlussglied (10) einen Anschlag (15) und der Grundkörper (80) einen Überlastsicherungsanschlag (85) aufweist, an den der Anschlag (15) anliegt, wenn das Hydraulikleitungsanschlussglied (10) vollständig eingeschraubt ist.

3. Gebervorrichtung für ein geschlossenes Hydrauliksystem lenkergeführter Fahrzeuge nach einem der vorhergehenden Ansprüche, bei der in dem Hydraulikleitungsanschlussglied (10) an der vom Druckraum abgewandten Seite des Gewindeabschnitts (14) eine Dichtung (16) angeordnet ist, die vorzugsweise als farbiger O-Ring ausgebildet ist.

4. Gebervorrichtung für ein geschlossenes Hydrauliksystem lenkergeführter Fahrzeuge nach einem der vorhergehenden Ansprüche, bei der eine Betätigungssensoreinrichtung (110) vorgesehen ist, die die Betätigung der Gebervorrichtung wahrnimmt.

5. Gebervorrichtung für ein geschlossenes Hydrauliksystem lenkergeführter Fahrzeuge nach dem vorhergehenden Anspruch, bei der die Betätigungssensoreinrichtung (110) einen Magneten (111) und einen Hallsensor (112) aufweist.

6. Gebervorrichtung für ein geschlossenes Hydrauliksystem lenkergeführter Fahrzeuge nach einem der vorhergehenden Ansprüche, bei der eine Schalt- und/oder Anzeigevorrichtung (130) zur Betätigung und/oder Anzeige des Zustands einer Fahrzeugbeleuchtung, einer Federungscharakteristik, eines Elektroantriebs vorgesehen ist.

7. Gebervorrichtung für ein geschlossenes Hydrauliksystem lenkergeführter Fahrzeuge, nach einem der vorhergehenden Ansprüche, mit einer Befestigungseinrichtung (120) zur Befestigung der Gebervorrichtung an einem Lenker des lenkergeführten Fahrzeugs,
wobei die Befestigungseinrichtung (120) einen Lenkerbefestigungsabschnitt (121) zur Aufnahme des Lenkerrohrs des lenkergeführten Fahrzeugs aufweist, der einen Umfangsabschnitt des Lenkerrohrs von mehr als 180°, vorzugsweise von mehr als 181°, weiter vorzugsweise von mehr als 182° und bevorzugt von ungefähr 185° einschließt.

8. Gebervorrichtung für ein geschlossenes Hydrauliksystem lenkergeführter Fahrzeuge nach dem vorhergehenden Anspruch, bei der die Befestigungseinrichtung (120) eine Schelle (122) aufweist, die mit dem Befestigungsabschnitt (121) derart zusammenwirkt, dass der Befestigungsabschnitt (121) mit der Schelle (122) das Lenkerrohr des lenkergeführten Fahrzeugs einschließt.

9. Gebervorrichtung für ein geschlossenes Hydrauliksystem lenkergeführter Fahrzeuge nach einem der vorhergehenden Ansprüche, bei der die Gebervorrichtung ein Gebergehäuse (80) aufweist, in dem ein Hydraulikzylinder (86) und ein darin gegenüber einem Druckraum (61) verschiebbaren Kolben (60) angeordnet sind, wobei das Druckstück (40) eine Drehlageraufnahme (42) zur Aufnahme eines Lagerbolzens (82) aufweist.

10. Gebervorrichtung für ein geschlossenes Hydrauliksystem lenkergeführter Fahrzeuge, nach einem der vorhergehenden Ansprüche, mit
einem Hebel (30) zur Betätigung der Gebervorrichtung,
einer Griffweiteneinstelleinrichtung (70) zur Einstellung der Griffweite,
einem Druckstück (40) zur drehbaren Lagerung des Hebels (30) an der Gebervorrichtung, und
einer Druckpunktverstell- und/oder Brems- oder Kupplungsbelagsnachstelleinrichtung (50) zum Einstellen des Druckpunktes und/oder zum Ausgleichen eines Belagverschleißes,
wobei der Hebel (30) gegenüber dem Druckstück (40) schwenkbar angeordnet ist, wobei der Winkel (α) zwischen dem Hebel (30) und dem Druckstück (40) durch die Griffweiteneinstelleinrichtung (70) einstellbar ist, und dass die Druckpunktverstell- und/oder Brems- oder Kupplungsbelagsnachstelleinrichtung (50) derart ausgebildet ist, dass der Abstand zwischen dem Druckstück (40) und dem Druckraum (61) mittels der Druckpunktverstell- und/oder Brems- oder Kupplungsbelagsnachstelleinrichtung (50) einstellbar ist.

11. Gebervorrichtung für ein geschlossenes Hydrauliksystem lenkergeführter Fahrzeuge nach dem vorhergehenden Anspruch, bei der die Griffweiteneinstellvorrichtung (70) einen Bolzen (71) mit einem Anschlagsabschnitt (73) aufweist, der mit einem entsprechenden an dem Druckstück (40) ausgebildeten Anschlagabschnitt (43) zusammenwirkt.

12. Gebervorrichtung für ein geschlossenes Hydrauliksystem lenkergeführter Fahrzeuge nach einem der beiden vorhergehenden Ansprüche, bei der die Griffweiteneinstellvorrichtung (70) einen Eingriffsabschnitt (72) zum Eingriff eines Werkzeugs zur Einstellung der Griffweite aufweist.

13. Gebervorrichtung für ein geschlossenes Hydrauliksystem lenkergeführter Fahrzeuge nach einem der drei vorhergehenden Ansprüche, bei der die Griffweiteneinstellvorrichtung (70) eine Vorspanneinrichtung (74) aufweist, die den Hebel (30) entlang des Schwenkweges in Richtung Druckstück (40) vorspannt.

14. Gebervorrichtung für ein geschlossenes Hydrauliksystem lenkergeführter Fahrzeuge nach einem der vier vorhergehenden Ansprüche, ferner mit einer Druckpunktverstell- und/oder Brems- oder Kupplungsbelagsnachstelleinrichtung (50), die vorzugsweise einen Bolzen aufweist, der in einer Aufnahme (44) des Druckstücks (40) aufgenommen ist, wobei die relative Lage des Bolzens in der Aufnahme (44) einstellbar ist.

15. Hydraulische Bremse und/oder hydraulische Fahrradbremse und/oder hydraulische Fahrradfelgenbremse und/oder hydraulische Fahrradscheibenbremse und/oder hydraulische Kupplung und/oder hydraulische Elektrofahrradbremse und/oder Fahrrad und/oder Elektrofahrrad und/oder Motorrad mit zumindest einer Gebervorrichtung nach einem der vorhergehenden Ansprüche.

## Claims

1. Transmitter device for a closed hydraulic system for handlebar-guided vehicles, comprising
a pressure chamber (61), in which hydraulic fluid is pressurized upon actuation of the transmitter device in order to actuate a receiving device,
a hydraulic line connection element (10), which has a connecting piece (11) for connecting a hydraulic line (1) and a threaded section (14) for screwing into a main body (80) of the transmitter device, and
a vent opening (87) for venting the hydraulic system,
**characterized in that** the hydraulic line connection element and the main body form a valve that closes the connection between pressure chamber and vent opening when the hydraulic line connection element is fully screwed in, and/or **characterized in that** the hydraulic line connection element (10) has a sealing surface (13) and the main body has a sealing element (83), which cooperate with each other in such a way that the pressure chamber (61) is sealed with respect to the vent opening (87) when the hydraulic line connection element (10) is fully screwed into the main body (80), and **in that** the pressure chamber (61) communicates with the vent opening (87), when the hydraulic line connection element (10) is arranged in a partially screwed-in position and/or **characterized in that** the hydraulic line connection element (210) has a seal (213) and the main body (280) has a sealing surface (283), which cooperate with one another in such a way that the pressure chamber (261) is sealed with respect to the vent opening (287) when the hydraulic line connection element (210) is fully screwed into the main body (280), and **in that** the pressure chamber (261) communicates with the vent opening (287) when the hydraulic line connection element (210) is arranged in a partially screwed-in position.

2. Transmitter device for a closed hydraulic system for handlebar-guided vehicles according to the preceding claim, wherein the hydraulic line connection element (10) has a stop (15) and the main body (80) has an overload protection stop (85), on which the stop (15) abuts when the hydraulic line connection element (10) is fully screwed in.

3. Transmitter device for a closed hydraulic system for handlebar-guided vehicles according to any of the preceding claims, wherein a seal (16), which is preferably made as a colored O-ring, is arranged in the hydraulic line connection element (10) on the side of the threaded section (14) that faces away from the pressure chamber.

4. Transmitter device for a closed hydraulic system for handlebar-guided-vehicles according to any of the preceding claims, wherein an actuation sensor apparatus (110) is provided which senses the actuation of the transmitter device.

5. Transmitter device for a closed hydraulic system for handlebar-guided vehicles according to the preceding claim, wherein the actuation sensor apparatus (110) has a magnet (111) and a Hall sensor (112).

6. Transmitter device for a closed hydraulic system for handlebar-guided vehicles according to any of the preceding claims, wherein a switching and/or display device (130) is provided for actuating and/or displaying the state of vehicle lighting, a suspension characteristic, an electric drive.

7. Transmitter device for a closed hydraulic system for handlebar-guided vehicles, according to any of the preceding claims, comprising a fastening apparatus (120) for fastening the transmitter device to a handlebar of the handlebar-guided vehicle,
wherein the fastening apparatus (120) has a handlebar fastening portion (121) for receiving the handlebar tube of the handlebar-guided vehicle, which encloses a peripheral portion of the handlebar tube of more than 180°, preferably more than 181°, more preferably of more than 182° and in particular of about 185°.

8. Transmitter device for a closed hydraulic system for handlebar-guided vehicles according to the preceding claim, wherein the fastening apparatus (120) comprises a clamp (122), which cooperates with the fastening portion (121) in such a way that the fastening portion (121) with the clamp (122) encloses the handlebar tube of the handlebar-guided vehicle.

9. Transmitter device for a closed hydraulic system for handlebar-guided vehicles according to any of the preceding claims, wherein the transmitter device has a transmitter housing (80) in which a hydraulic cylinder (86) and a piston (60) displaceable therein relative to a pressure chamber (61) are arranged, the thrust piece (40) having a pivot bearing receptacle (42) for receiving a bearing pin (82).

10. Transmitter device for a closed hydraulic system for handlebar-guided vehicles according to any of the preceding claims, comprising
a lever (30) for actuating the transmitter device,
a handle width adjusting apparatus (70) for adjusting the handle width,
a thrust piece (40) for rotatably mounting the lever (30) on the transmitter device, and
a pressure point adjusting and/or brake or clutch lining adjusting apparatus (50) for adjusting the pressure point and/or for compensating a lining wear,
wherein the lever (30) is pivotally arranged relative to the thrust piece (40), wherein the angle (α) between the lever (30) and the thrust piece (40) is adjustable by the handle width adjusting apparatus (70), and wherein the pressure point adjusting and/or brake or clutch lining adjusting apparatus (50) is designed in such a way that the distance between the thrust piece (40) and the pressure chamber (61) is adjustable by means of the pressure point adjusting and/or brake or clutch lining adjusting apparatus (50).

11. Transmitter device for a closed hydraulic system for handlebar-guided vehicles according to the preceding claim, wherein the handle width adjusting device (70) has a bolt (71) with a stop section (73), which interacts with a corresponding stop section (43) formed on the thrust piece (40).

12. Transmitter device for a closed hydraulic system of handlebar-guided vehicles according to one of the two preceding two claims, wherein the handle width adjusting device (70) has an engaging portion (72) for engaging a tool for adjusting the handle width.

13. Transmitter device for a closed hydraulic system for handlebar-guided vehicles according to one of the three preceding claims, wherein the handle width adjusting device (70) has a biasing apparatus (74) which biases the lever (30) along the pivot path in the direction of the thrust piece (40).

14. Transmitter device for a closed hydraulic system for handlebar-guided vehicles according to any of the four preceding claims, further comprising a pressure point adjusting and/or brake or clutch adjusting apparatus (50), which preferably has a bolt that is received in a receptacle (44) of the thrust piece (40), the relative position of the bolt in the receptacle (44) being adjustable.

15. Hydraulic brake and/or hydraulic bicycle brake and/or hydraulic bicycle rim brake and/or hydraulic bicycle disk brake and/or hydraulic clutch and/or hydraulic electric bicycle brake and/or bicycle and/or electric bicycle and/or motorcycle with at least one transmitter device according to any of the preceding claims.

## Revendications

1. Dispositif émetteur pour un système hydraulique fermé de véhicules guidés par bras oscillant, comportant
une chambre de pression (61) dans laquelle un liquide hydraulique est mis sous pression lors de l'actionnement du dispositif émetteur en vue d'actionner un dispositif récepteur,
un organe de raccordement de conduite hydraulique (10) qui comprend un manchon de raccordement (11) pour raccorder une conduite hydraulique (1) et une portion filetée (14) pour la visser dans un corps de base (80) du dispositif émetteur, et
une ouverture de purge (87) pour purger le système hydraulique,
**caractérisé en ce que**
l'organe de raccordement de conduite hydraulique et le corps de base constituent une vanne qui ferme la liaison entre la chambre de pression et l'ouverture de purge lorsque l'organe de raccordement de conduite hydraulique est vissé à fond, et/ou
**caractérisé en ce que**
l'organe de raccordement de conduite hydraulique (10) présente une surface d'étanchéité (13) et le corps de base présente un organe d'étanchéité (83) qui coopèrent l'un avec l'autre de telle sorte que la chambre de pression (61) est étanchée par rapport à l'ouverture de purge (87) lorsque l'organe de raccordement de conduite hydraulique (10) est vissé à fond dans le corps de base (80), et que la chambre de pression (61) est en communication avec l'ouverture de purge (87) lorsque l'organe de raccordement de conduite hydraulique (10) est agencé dans une position vissée partiellement, et/ou **en ce que**
l'organe de raccordement de conduite hydraulique (210) présente un joint d'étanchéité (213) et le corps de base (280) présente une surface d'étanchéité (283) qui coopèrent l'un avec l'autre de telle sorte que la chambre de pression (261) est étanchée par rapport à l'ouverture de purge (287) lorsque l'organe de raccordement de conduite hydraulique (210) est vissé à fond dans le corps de base (280), et que la chambre de pression (261) est en communication avec l'ouverture de purge (287) lorsque l'organe de raccordement de conduite hydraulique (210) est agencé dans une position vissée partiellement.

2. Dispositif émetteur pour un système hydraulique fermé de véhicules guidés par bras oscillant selon la revendication précédente, dans lequel l'organe de raccordement de conduite hydraulique (10) comprend une butée (15) et le corps de base (80) comprend une butée anti-surcharge (85) contre laquelle la butée (15) vient en appui lorsque l'organe de raccordement de conduite hydraulique (10) est vissé à fond.

3. Dispositif émetteur pour un système hydraulique fermé de véhicules guidés par bras oscillant selon l'une des revendications précédentes, dans lequel un joint d'étanchéité (16) est agencé dans l'organe de raccordement de conduite hydraulique (10) sur le côté de la portion filetée (14) détourné de la chambre de pression, joint d'étanchéité qui est réalisé de préférence sous la forme d'un joint torique coloré.

4. Dispositif émetteur pour un système hydraulique fermé de véhicules guidés par bras oscillant selon l'une des revendications précédentes, dans lequel il est prévu un moyen formant capteur d'actionnement (110) qui perçoit l'actionnement du dispositif émetteur.

5. Dispositif émetteur pour un système hydraulique fermé de véhicules guidés par bras oscillant selon la revendication précédente, dans lequel le moyen formant capteur d'actionnement (110) comprend un aimant (111) et un capteur de Hall (112).

6. Dispositif émetteur pour un système hydraulique fermé de véhicules guidés par bras oscillant selon l'une des revendications précédentes, dans lequel il est prévu un dispositif de commutation et/ou d'affichage (130) pour actionner et/ou afficher l'état d'un éclairage de véhicule, d'une caractéristique de suspension, d'un entraînement électrique.

7. Dispositif émetteur pour un système hydraulique fermé de véhicules guidés par bras oscillant selon l'une des revendications précédentes, comportant un moyen de fixation (120) pour fixer le dispositif émetteur sur un bras oscillant du véhicule guidé par bras oscillant,
dans lequel
le moyen de fixation (120) comprend une portion de fixation de bras oscillant (121) pour recevoir le tube du bras oscillant du véhicule guidé par bras oscillant, qui emprisonne une portion périphérique du tube de bras oscillant sur plus de 180°, de préférence sur plus de 181°, préférentiellement sur plus de 182° et de préférence absolue sur environ 185°.

8. Dispositif émetteur pour un système hydraulique fermé de véhicules guidés par bras oscillant selon la revendication précédente, dans lequel le moyen de fixation (120) comprend un collier (122) qui coopère avec la portion de fixation (121) de telle sorte que la portion de fixation (121) emprisonne avec le collier (122) le tube de bras oscillant du véhicule guidé par bras oscillant.

9. Dispositif émetteur pour un système hydraulique fermé de véhicules guidés par bras oscillant selon l'une des revendications précédentes, dans lequel le dispositif émetteur comprend un boîtier émetteur (80) dans lequel sont agencés un vérin hydraulique (86) et un piston (60) mobile dans celui-ci par rapport à une chambre de pression (61), l'élément de compression (40) présentant un logement de palier rotatif (42) pour recevoir un goujon de palier (82).

10. Dispositif émetteur pour un système hydraulique fermé de véhicules guidés par bras oscillant selon l'une des revendications précédentes, comportant
un levier (30) pour actionner le dispositif émetteur,
un dispositif de réglage de largeur d'engagement (70) pour régler la largeur d'engagement,
un élément de compression (40) pour le montage rotatif du levier (30) sur le dispositif émetteur, et
un moyen de réglage de point de compression et/ou de ré-ajustage de garniture de frein ou d'embrayage (50) pour régler le point de compression et/ou pour rattraper une usure de garniture,
dans lequel
le levier (30) est agencé mobile en pivotement par rapport à l'élément de compression (40), l'angle (α) entre le levier (30) et l'élément de compression (40) étant réglable par le moyen de réglage de largeur d'engagement (70),
et en ce que le moyen de réglage de point de compression et/ou de ré-ajustage de garniture de frein ou d'embrayage (50) est réalisé de telle sorte que la distance entre l'élément de compression (40) et la chambre de pression (61) est réglable à l'aide du moyen de réglage de point de compression et/ou de ré-ajustage de garniture de frein ou d'embrayage (50).

11. Dispositif émetteur pour un système hydraulique fermé de véhicules guidés par bras oscillant selon la revendication précédente, dans lequel le dispositif de réglage de largeur d'engagement (70) comprend un goujon (71) pourvu d'une portion de butée (73) qui coopère avec une portion de butée (43) réalisée en correspondance sur l'élément de compression (40).

12. Dispositif émetteur pour un système hydraulique fermé de véhicules guidés par bras oscillant selon l'une des deux revendications précédentes, dans lequel le dispositif de réglage de largeur d'engagement (70) comprend une portion d'intervention (72) pour l'intervention d'un outil en vue de régler la largeur d'engagement.

13. Dispositif émetteur pour un système hydraulique fermé de véhicules guidés par bras oscillant selon l'une des trois revendications précédentes, dans lequel le dispositif de réglage de largeur d'engagement (70) comprend un moyen de précontrainte (74) qui précontraint le levier (30) le long de la course de pivotement en direction de l'élément de compression (40).

14. Dispositif émetteur pour un système hydraulique fermé de véhicules guidés par bras oscillant selon l'une des quatre revendications précédentes, comportant en outre un moyen de réglage de point de compression et/ou de ré-ajustage de garniture de frein ou d'embrayage (50) qui comprend de préférence un goujon qui est logé dans un logement (44) de l'élément de compression (40), la position relative du goujon dans le logement (44) étant réglable.

15. Frein hydraulique et/ou frein hydraulique de bicyclette et/ou frein hydraulique sur jante de bicyclette et/ou frein hydraulique à disque pour bicyclette et/ou embrayage hydraulique et/ou frein hydraulique de bicyclette électrique et/ou bicyclette et/ou bicyclette électrique et/ou motocyclette comportant au moins un dispositif émetteur selon l'une des revendications précédentes.
